# EUROPEAN PATENT APPLICATION

(11) **EP 4 219 932 A1**
(43) Date of publication of application: **02.08.2023**
(21) Application number: 22153586.7
(22) Date of filing: 27.01.2022
(51) Int. Cl.: F02M 37/00, H01R 13/00, B60K 15/03

(54) **GROUNDING MEANS FOR A FUEL LINE**

(71) Applicant: A. Raymond et Cie, 38000 Grenoble (FR)
(72) Inventor: Schmedes, Stefan, 27711 Heilshorn (DE)
(74) Representative: König Szynka Tilmann von Renesse Patentanwälte Partnerschaft mbB Düsseldorf

(57) **Abstract**

The invention relates to a grounding means (2) for a fuel line (4) of a vehicle, with at least one electrically conductive fixing element (6), with an electrically conductive connecting element (8), with at least one electrically conductive mounting element (10), wherein the at least one fixing element (6) is attachable to a fuel line (4), wherein the at least one mounting element (10) is attachable to a ground connection (12), wherein the at least one fixing element (6) and the at least one mounting element (10) are electrically connected by the connecting element (8), characterised in that the connecting element (8) is elastic. Further, the invention relates to a vehicle with a fuel pipe (4) connected to a ground connection (12) by a grounding means (2) according to the invention.

## Description

### FIELD OF INVENTION

The present invention concerns a grounding means for a fuel line of a vehicle and a vehicle with a fuel pipe connected to a ground connection by a grounding means according to the invention.

A grounding means for a fuel line of a vehicle usually comprises at least one electrically conductive fixing element, an electrically conductive connecting element, and at least one electrically conductive mounting element. The at least one fixing element is attachable to a fuel line and the at least one mounting element is attachable to a ground connection. The at least one fixing element and the at least one mounting element are electrically connected by the connecting element.

The grounding means is for example used to remove the static electricity from the fuel system. The static electricity in the fuel system, which results from the movement of the fuel inside the fuel system, could lead to a spark stroke causing a fire or explosion in the vehicle. A fire or explosion would cause material damage and personal damage. Hence, to prevent any damage the static electricity must be removed from the fuel system.

The static electricity can be removed by the grounding means, which is connected to a fuel line of the fuel system with its at least one fixing element and to a ground connection with its at least one mounting element. The static electricity is lead from the at least one fixing element by the connecting element to the at least one mounting element, where the static electricity is neutralized by the ground connection.

Usually, grounding meanss are made of metal and are therefore rigid. Nevertheless, each vehicle has its specific design, so that the position of the fuel line in relation to the ground connection differ for each vehicle. Furthermore, the geometry of the fuel line and the ground connection vary. Thus, for each vehicle a grounding means with a specific geometry must be constructed. This leads to high manufacturing costs and the assembly of the grounding means is difficult due to the rigid structure.

Based on this state of the art the problem to be solved by the present invention is to provide a grounding means, which can safely neutralize static electricity and can be produced cost-effective, while at the same time the grounding means can be easily adapted and assembled to any vehicle.

This problem is solved by the grounding means according to claim 1, the system according to claim 14 and the vehicle according to claim 15. Preferred embodiments are discussed in the subordinate claims and the description following hereafter.

This object is solved by a grounding means for a fuel line of a vehicle, with at least one electrically conductive fixing element, with an electrically conductive connecting element, with at least one electrically conductive mounting element, wherein the at least one fixing element is attachable to a fuel line, wherein the at least one mounting element is attachable to a ground connection, wherein the at least one fixing element and the at least one mounting element are electrically connected by the connecting element, wherein the connecting element is elastic.

Due to the elastic connecting element the grounding means is easy to adapt and to assemble to any type of vehicle, while static electricity can be safely neutralized. The distance and position of the at least one fixing element and the mounting element to each other can be changed to fit to the vehicle and its ground connection and its fuel line. Thus, the grounding means according to the invention can be easily adapted to any type of vehicle. In addition, the grounding means fits to any vehicle, so that no individual construction for each car is necessary resulting in low manufacturing costs.

A vehicle with a fuel line can be an aircraft, a watercraft and/or a land vehicle. A land vehicle can be especially a passenger car or a truck.

An electrically conductive fixing element is used to attach the grounding means to a fuel line. In a preferred embodiment the at least one fixing element can be attached firmly to a fuel line to prevent a detachment due to the vibration during the movement of the vehicle. The at least one fixing element can therefore be attachable to a fuel line in a firmly bonded, form-locking and/or force-locking manner. The shape of the at least one fixing element can be adjusted to provide a good electrical contact to the fuel line. Multiple fixing elements can be used to ground various parts of the fuel system and/or vehicle.

While in the specific use within a specific vehicle, the grounding means will have at least one specifically shaped electrically conductive fixing element, the invention also pertains to a system of a grounding means with at least one additional additional electrically conductive fixing element that is
- shaped differently to the electrically conductive fixing element of the grounding means, but
- can be electrically connected to the connecting element in place of the electrically conductive fixing element of the grounding means or in addition to the electrically conductive fixing element of the grounding means.

The system according to the invention provides the possibility to choose the one fixing element out of the system that best fits the mounting situation. Hence, if within a vehicle at least two grounding means are used, it may be that for the first grounding means that is in a first mounting situation, a first fixing element of a first design may be best suited, while for the second grounding means that is in a second mounting situation, a second fixing element of a second design may be better suited. By way of providing at least two differently shaped fixing elements that can be attached to the connecting element, the system provides flexibility. In a preferred embodiment, the system has one connecting element, but a multitude of differently shaped fixing elements that can be attached to the one connecting element.

The at least one electrically conductive mounting element is attachable to a ground connection, so that the at least one electrically conductive mounting element can be connected to the ground connection in a firmly bonded, form-locking and/or force-locking manner. The shape of the at least one mounting element can be adjusted to provide a good electrical contact to the fuel line.

The ground connection can neutralize the static electricity of a fuel system. Hence, the ground connection can be the vehicle body, especially the chassis of the vehicle or an earth connection.

An electrically conductive connecting element electrically connects the at least one fixing element and the at least one mounting element. The connecting element is thus connected to the at least one fixing element and the at least one mounting element in a firmly bonded, form-locking and/or force-locking manner. Further, the connecting element is elastic, so that its shape and length is variable.

In a preferred embodiment the grounding means can have an electrical resistivity of more than 10⁵ Ohm and/or less than 10⁷ Ohm, preferably in the order of magnitude of 10⁶ Ohm. In this way, the static electricity can be neutralized by the grounding means. At the same time an electrical resistivity of the magnitude of 10⁶ Ohm prevents that a large electrical current is conducted through the grounding means. Thus, the safety of the grounding means is increased.

In a preferred embodiment the connecting element can be wavelike and/or spiral. If the connecting element can be wavelike and/or spiral, the connecting element can be very long, so that the distance of the at least one fixing element and the at least one mounting element can be varied over a wide range. At the same time a wavelike and/or spiral long connecting element can be stored compactly in a vehicle. Hence, the grounding means can be easily adapted and assembled to any vehicle.

In a preferred embodiment, the connecting element is band-shaped, which includes the embodiment of a band that has been bent into the shape of a wave or the shape of a spiral. In a preferred embodiment the cross-section of the band at least for a part of the longitudinal extend of the band, preferably for the majority (more than 50%), preferably for the overwhelming majority (over 75%) of the longitudinal extend of the band is rectangular or ellipctial or diamond shaped. In a preferred embodiment, the width of the band at least for a part of the longitudinal extend of the band, preferably for the majority (more than 50%), preferably for the overwhelming majority (over 75%) of the longitudinal extend of the band is between 5mm and 25mm, preferably between 6mm and 20mm, preferably between 7mm and 15mm. In a preferred embodiment, the height of the band at least for a part of the longitudinal extend of the band, preferably for the majority (more than 50%), preferably for the overwhelming majority (over 75%) of the longitudinal extend of the band is between 0,5mm and 3mm, preferably between 0,6mm and 2mm, preferably between 0,7mm and 1,5mm. In a preferred embodiment, the length of the band, which is to mean the actual length of the band and not the (possibly much shorted) extend of the bent band in its wavelike or spiral form, is between 50mm and 350mm, preferably between 60mm and 300mm, preferably between 70mm and 200mm.

In a preferred embodiment the at least one mounting element can be elastic or inelastic. An elastic mounting element can absorb the vibrations during the movement of the vehicle. In this way, the attachment of the mounting element can be improved and safe during the movement. An inelastic mounting element can be easy to assemble.

In preferred embodiment the at least one mounting element can be attachable to a ground connection by a bolt, a clip tie, a clip, soldering, welding and/or bonding. A bolt, a clip tie and/or a clip can be easy to assemble. Soldering, welding and/or bonding can lead to a strong connection between the at least one mounting element and the ground connection, so that the safe attachment during the movement of the vehicle can be assured.

In preferred embodiment the at least one mounting element can be an anti-creep ring. An anti-creep ring can assure a secure fit of the at least one mounting element at the ground connection. Hence, the grounding element can be safely connected to the ground connection, so that static electricity can be safely neutralized. In addition, an anti-creep ring can be easily adapted and assembled to a vehicle.

In preferred embodiment the at least one fixing element can be a fastening clip, whose geometric form can be adaptable to a fuel line. A fastening clip can be easy to assemble to a vehicle, while at the same time it can assure a safe connection of the at least one fixing element to the fuel line. Hence, static electricity can be safely neutralized. If the geometric form of the at least one fixing element can be adaptable to a fuel line, the at least one fixing element and thus the grounding means be easily adapted to any vehicle.

In preferred embodiment the at least one fixing element can comprise at least one securing means. By securing the at least one fixing element with securing meanss the detachment of the at least one fixing element from a fuel line can be prevented. Hence, the safety of the ground means can be increased. The at least one securing means can be a clamp screw, a snap lock, a clip and/or a clip tie. A clamp screw and/or a snap lock can advantageously be opened non-destructively for example for a repair.

In preferred embodiment the at least one fixing element can be rotatable connected to the connecting element. In this way the at least one fixing element can be oriented independently from the connecting element. Thus, the grounding means can be easily adapted and assembled to a vehicle. The rotatable connection can be realised by a rotation bearing. To enable a rotatable connection the at least one fixing element can be a swivel clip.

In preferred embodiment the at least one fixing element can be made of an electrically conductive plastic. The conductivity of the plastic can easily be adapted to guarantee a safe neutralization of static electricity, while the grounding means can be produced cost-effective. In a preferred embodiment, the electrically conductive plastic contains additives like carbon fiber that assist the plastic to become electrically conductive. In a preferred embodiment, the plastic contains and especially predominantely is made of a thermoplast. In a preferred embodiment, the plastic contains and especially predominantely is made of a polyamide. In a preferred embodiment, the plastic used for the fixing element is the product VESTAMlD^{®} of the company Degussa AG, especially VESTAMID X3500. In a preferred embodiment, the plastic used for the fixing element is the product BADAMID^{®} of the company Bada AG, especially BADAMID A70 LR15 L schwarz S1.

In a preferred embodiment the fixing element and the connecting element are made from the same material. In an alternative embodiment, the fixing element and the connecting element are made from different material, but both are made from plastic material.

In a preferred embodiment the mounting element and the connecting element are made from the same material. In an alternative embodiment, the mounting element and the connecting element are made from different material, but both are made from plastic material. In an alternative embodiment, the mounting element is made from metal and the connecting element are made from plastic material.

In a preferred embodiment, the mounting element can be an insert that is set into a hole of the connecting element.

In a preferred embodiment the fixing element has a socket that contains a hole having an opening for the insertion of a pin, whereby a ring shaped holding portion of a first diameter is arranged inside the hole and whereby a head space of second diameter that is larger than the first diameter is provided as part of the hole, whereby the ring shaped holding portion is arranged closer to the opening. In a preferred embodiment the hole is a blind hole.

In a preferred embodiment the connecting element has a pin that is inserted into a hole of the fixing element, the pin having an intermediate portion of a smaller diameter and a head portion of a larger diameter.

In a preferred embodiment the fixing element has a pin that is inserted into a hole of the connecting element, the pin having an intermediate portion of a smaller diameter and a head portion of a larger diameter.

In a preferred embodiment, the connecting element has a socket that contains a hole having an opening for the insertion of a pin, whereby a ring shaped holding portion of a first diameter is arranged inside the hole and whereby a head space of second diameter that is larger than the first diameter is provided as part of the hole, whereby the ring shaped holding portion is arranged closer to the opening. In a preferred embodiment the hole is a blind hole.

In a preferred embodiment, the connecting element has
- has a pin that is inserted into a hole of the fixing element, the pin having an intermediate portion of a smaller diameter and a head portion of a larger diameter and
- a socket that contains a hole having an opening for the insertion of a pin, whereby a ring shaped holding portion of a first diameter is arranged inside the hole and whereby a head space of second diameter that is larger than the first diameter is provided as part of the hole, whereby the ring shaped holding portion is arranged closer to the opening.

In a preferred embodiment the hole is a blind hole. In a preferred embodiment the pin and the socket are arranged at the same end of the connecting element.

In a preferred embodiment, the pin is inserted into a hole of a first fixing and a second fixing element, which has a pin that is inserted into the hole of the connecting element, is provided, whereby the pin has an intermediate portion of a smaller diameter and a head portion of a larger diameter.

In preferred embodiment the at least one fixing element can comprise an attaching element. By an attaching element the at least one fixing element can be fixed to the vehicle body for example the chassis of the vehicle. In this way the fuel pipe as well as the grounding means can be tightly attached, to ensure a safe neutralization of static electricity. An attaching element can be a bolt, a connecting pin and/or a cable tie.

This object is also solved by a vehicle with a fuel pipe connected to a ground connection by a grounding means according to the invention. With the vehicle the same advantages elucidated above for the grounding means are achieved.

The exemplary configurations of the present invention that are described above in this description are also intended to be understood as disclosed in all combinations with one another. In particular, exemplary configurations are intended to be understood as disclosed in relation to the different aspects of the invention.

In particular, the description of the grounding means above or below in accordance with preferred embodiments of the grounding means is also intended to disclose corresponding meanss for a vehicle through preferred embodiments of the grounding means.

Further advantageous exemplary configurations of the invention can be found in the detailed description below of some exemplary embodiments of the present invention, particularly in conjunction with the figures. However, the figures are intended to serve only the purpose of clarification, but not to determine the scope of protection of the invention. The figures are not to scale and are merely intended to reflect the general concept of the present invention by way of example. In particular, features that are contained in the figures are in no way intended to be regarded as a necessary part of the present invention.

### BRIEF DESCRIPTION OF THE FIGURES

In the figures:
- **FIG. 1**: shows an exploded view of an exemplary embodiment of a grounding means according to the invention;
- **FIG. 2**: shows another embodiment of a grounding means according to the invention;
- **FIG. 3**: shows another embodiment of a grounding means according to the invention;
- **FIG. 4**: shows a perspective view onto a connecting element and a mounting element according to the invention;
- **FIG. 5**: a top view onto the connecting element and the mounting element of Fig. 4;
- **FIG. 6**: a sectional view along the lines A-A in Fig. 8 onto the connecting element and the mounting element of Fig. 4;
- **FIG. 7**: a front view onto the connecting element and the mounting element of Fig. 4;
- **FIG. 8**: a side view onto the connecting element and the mounting element of Fig. 4;
- **FIG. 9**: a sectional view onto a part of the fixing element that has a blind hole and
- **FIG. 10**: a side view onto a part of the connecting element that has a pin.

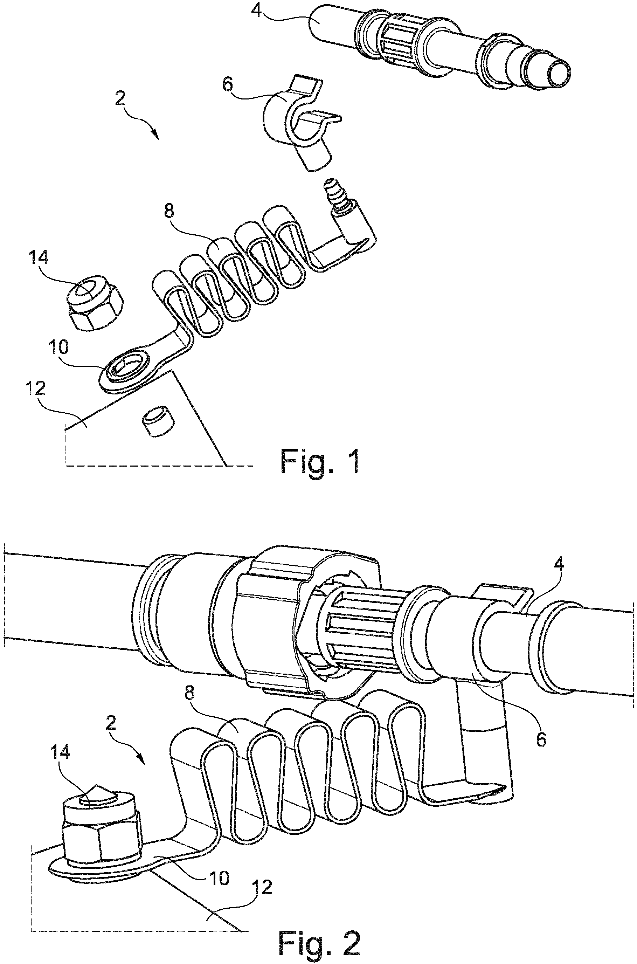

FIG. 1 shows an exploded view of an exemplary embodiment of a grounding means 2 according to the invention. The grounding means 2 for a fuel line 4 of a vehicle comprises an electrically conductive fixing element 6, an electrically conductive connecting element 8 and an electrically conductive mounting element 10. The fixing element 6 is attachable to a fuel line 4 and the mounting element 10 is attachable to a ground connection 12. The fixing element 6 and the mounting element 10 are electrically connected by the connecting element 8. The connecting element 8 is elastic. The grounding means 2 has an electrical resistivity of 10⁶ Ohm.

The connecting element 8 is wavelike. Alternatively, the connecting element 8 can be spiral. Further, the mounting element 10 is elastic. Alternatively, the mounting element 10 can be inelastic. The mounting element 10 is attachable to a ground connection 12 by a bolt 14. The mounting element 10 can alternatively be attachable to a ground connection 12 by a clip tie, a clip, soldering, welding and/or bonding. Moreover, the mounting element 10 is an anti-creep ring.

Fig. 2 shows another embodiment of a grounding means 2 according to the invention. The grounding means 2 is attached to a fuel line 4 and to a ground connection 12. As shown in Fig. 2 the fixing element 6 is a fastening clip, whose geometric form is adaptable to a fuel line 4. The fixing element 6 can also comprise at least one securing means.

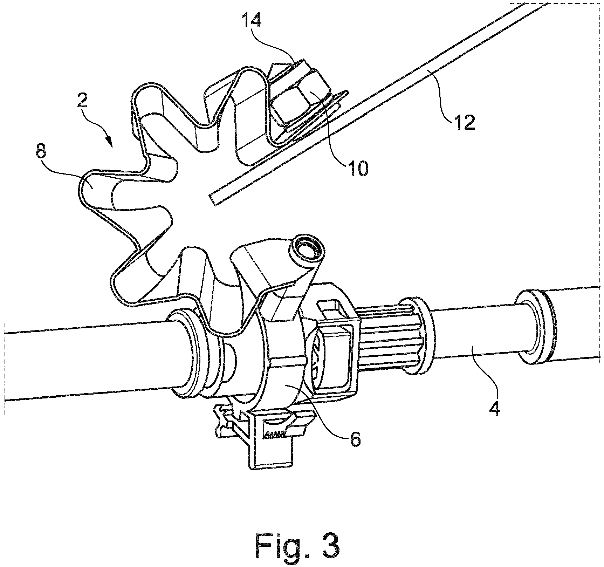

FIG. 3 shows another embodiment of a grounding means 2 according to the invention. Here the elastic connecting element 8 is used to attach the fixing element 6 to a fuel line 4, while the mounting element 10 is attached to a ground connection 12. Due to the elasticity of the connecting element 8 the grounding means 2 is easily adapted and assembled to the fuel line of the vehicle.

In addition, the fixing element 6 is rotatable connected to the connecting element 8. Thus, the grounding means 2 is easily adapted to the complex orientation of the fuel line 4 in relation to the ground connection 12. The fixing element 6 is made of an electrically conductive plastic. Furthermore, the fixing element could comprise an attaching element.

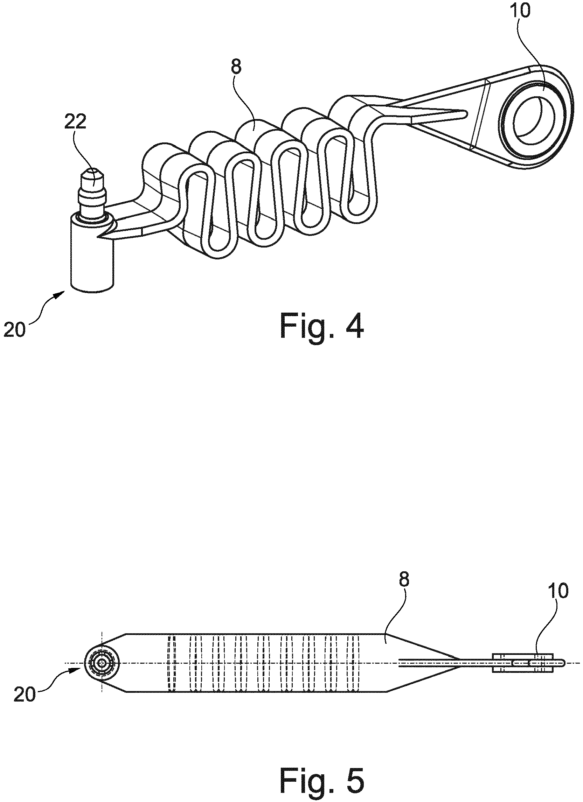

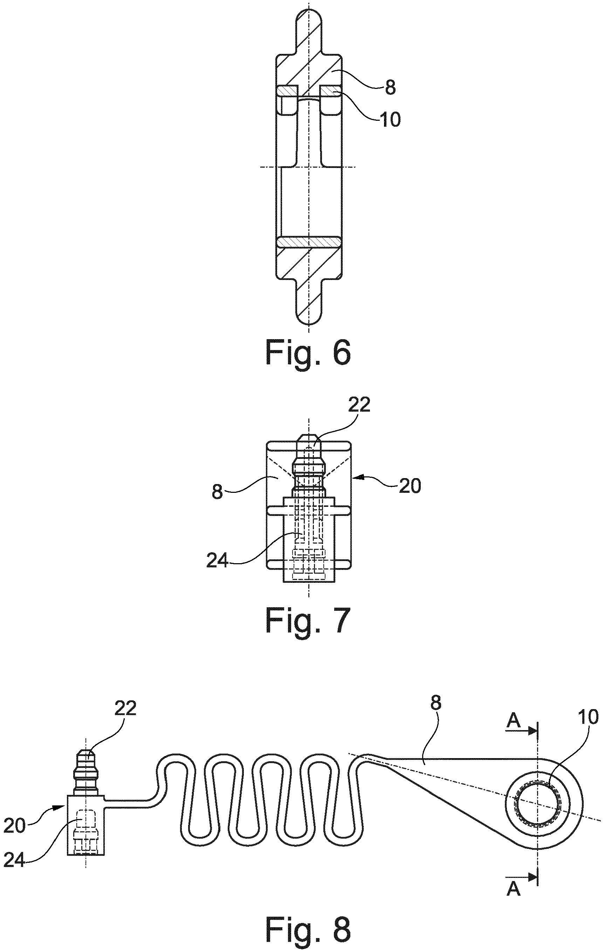

Fig. 4 to 8 show the connecting element 8 and the mounting element 10 of a grounding means according to the invention. Fig. 4 to 8 exemplify that the mounting element 10 can be an insert into an end portion of the connecting element 8, for example an anti-creeping ring set into a hole in an end portion of the connectin element 8.

Fig. 4 to 8 also show, that the connecting element 8 has an end 20 that is provide both with a pin 22 and a blind hole 24. Embodiments are feasible, where the only a pin 22 or only a hole 24 are provided at the end 20. But providing the pin 22 and the hole 24 at the end 22 offers the possibility to attach two fixing elements 6 to the end 20 or the freedom to choose between a first fixing element 6 that has a hole or a second fixing element 6 that has a pin. Hence, the end 20 as shown in Fig. 4 to 8 can be either used to only attach one fixing element 6 to it, but within this choose between different types of fixing elements (either with hole or with pin). Or the end 20 as shown in Fig. 4 to 8 can be used to attach two fixing elements to the end 20. One fixing element 6 could be used to attach to the fuel line 4; one fixing element 6 can be used to attach other things, like cables or hoses or pipes to the end 20 and by way of the end 20 and the other of the two fixing elements 6 to the fuel line 4.

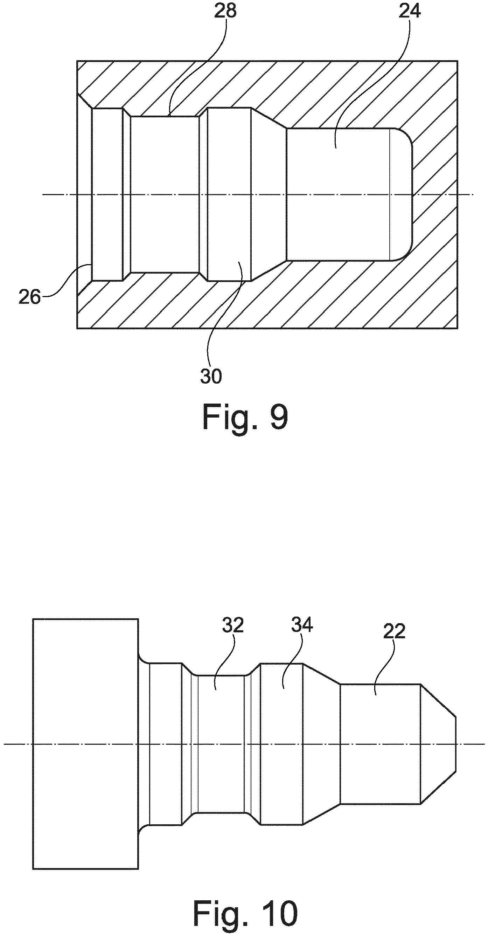

The connecting element 8 has a socket that contains the blind hole 24 (see Fig. 9) having an opening 26 for the insertion of a pin 22, whereby a ring shaped holding portion 28 of a first diameter is arranged inside the hole 24 and whereby a head space 30 of second diameter that is larger than the first diameter is provided as part of the hole 24, whereby the ring shaped holding portion 28 is arranged closer to the opening 26 than the head space 30. A fixing element having a pin like the pin 22 shown in Fig. 10 can attached to the socket by way of inserting the pin into the blind hole 24.

The connecting element 8 has a pin 22 (see Fig. 10). The pin has an intermediate portion 32 of a smaller diameter and a head portion 34 of a larger diameter. A fixing element 6 having a hole like the hole 24 shown in Fig. 9 can attached to the pin 22 by way of inserting the pin 22 into the hole. The fixing element 6 shown in Fig. 1 to 3 is attached to the connecting element 8 shown in Fig. 1 to 3 in that manner. The blind hole 24 is unused in the use situations shown in Fig. 1 to 3.

## Claims

1. A grounding means (2) for a fuel line (4) of a vehicle,
with at least one electrically conductive fixing element (6),
with an electrically conductive connecting element (8),
with at least one electrically conductive mounting element (10),
wherein the at least one fixing element (6) is attachable to a fuel line (4),
wherein the at least one mounting element (10) is attachable to a ground connection (12),
wherein the at least one fixing element (6) and the at least one mounting element (10)
are electrically connected by the connecting element (8),
**characterised in that**
the connecting element (8) is elastic.

2. Grounding means according to claim 1 **characterised in that** the grounding means (2) has an electrical resistivity of more than 10⁵ Ohm and/or less than 10⁷ Ohm

3. Grounding means according to claim 1 or 2 **characterised in that** the connecting element (8) is wavelike and/or spiral.

4. Grounding means according to one of the claims 1 to 3 **characterised in that** the at least one mounting element (10) is elastic or inelastic.

5. Grounding means according to one of the claims 1 to 4 **characterised in that** the at least one mounting element (10) is attachable to a ground connection (12) by a bolt (14), a clip tie, a clip, soldering, welding and/or bonding.

6. Grounding means according to one of the claims 1 to 5 **characterised in that** the at least one mounting element (10) is or contains an anti-creep ring and/or is or contains a metal insert.

7. Grounding means according to one of the claims 1 to 6 **characterised in that** the at least one fixing element (6) is a fastening clip, whose geometric form is adaptable to a fuel line (4).

8. Grounding means according to one of the claims 1 to 7 **characterised in that** the at least one fixing element (6) comprises at least one securing means.

9. Grounding means according to one of the claims 1 to 8 **characterised in that** the at least one fixing element (6) is rotatable connected to the connecting element (8).

10. Grounding means according to one of the claims 1 to 9 **characterised in that** the at least one fixing element (6) is made of an electrically conductive plastic.

11. Grounding means according to one of the claims 1 to 10 **characterised in that** the at least one fixing element (6) comprises an attaching element.

12. Grounding means according to any one of claims 1 to 11, **characterised in that**
• the fixing element (6) has a socket that contains a hole having an opening for the insertion of a pin, whereby a ring shaped holding portion of a first diameter is arranged inside the hole and whereby a head space of second diameter that is larger than the first diameter is provided as part of the hole, whereby the ring shaped holding portion is arranged closer to the opening than the head space, and
• the connecting element (8) has a pin (22) that is inserted into the hole, the pin (22) having a intermediate portion (32) of a smaller diameter and a head portion (34) of a larger diameter.

13. Grounding means according to any one of claims 1 to 12, **characterised in that**
• the connecting element (8) has a socket that contains a hole (24) having an opening (26) for the insertion of a pin, whereby a ring shaped holding portion (28) of a first diameter is arranged inside the hole (24) and whereby a head space (30) of second diameter that is larger than the first diameter is provided as part of the hole (24), whereby the ring shaped holding portion (28) is arranged closer to the opening (26) than the head space (30).

14. System comprising a grounding means (2) according to any one of claims 1 to 13 and an additional electrically conductive fixing element that is
• shaped differently to the electrically conductive fixing element (6) of the grounding means (2), but
• can be electrically connected to the connecting element (8) in place of the electrically conductive fixing element (6) of the grounding means (2) or in addition to the electrically conductive fixing element (6) of the grounding means (2).

15. Vehicle with a fuel pipe (4) connected to a ground connection (12) by a grounding means (2) according to any of claims 1 to 13.
